# EUROPEAN PATENT SPECIFICATION

(11) **EP 2 308 737 B1**
(45) Date of publication and mention of the grant of the patent: **25.05.2016**
(21) Application number: 09761837.5
(22) Date of filing: 10.06.2009
(51) Int. Cl.: B61D 19/02, G05B 19/042, H02P 7/00, H02P 7/285, H02P 7/29

(54) **CONTROL SYSTEM FOR TRAIN DOORS AND ACTUATION METHOD BASED ON SAID SYSTEM**
STEUERSYSTEM FÜR ZUGTÜREN UND AUF DEM SYSTEM BASIERENDES BETÄTIGUNGSVERFAHREN
SYSTÈME DE COMMANDE DE PORTES À USAGE FERROVIAIRE ET PROCÉDÉ D'ACTIONNEMENT FAISANT APPEL À CE SYSTÈME

(30) Priority: 10.06.2008 ES 200801751
(43) Date of publication of application: 13.04.2011
(73) Proprietor: Metro de Madrid, S.A., 28007 Madrid (ES)
(72) Inventor: GONZALEZ FERNANDEZ, Javier, E-28007 Madrid (ES); GARCIA SAN ANDRES, Mª Antonia, E-28007 Madrid (ES); SANCHO DE MINGO, Carlos, E-28007 Madrid (ES); MUÑOZ CONDES, Pilar, E-28007 Madrid (ES); DE LA PEÑA LLERANDI, Jaime, E-28007 Madrid (ES); CEZON DOMINGUEZ, Angel, R., E-28007 Madrid (ES); RUIZ CANO, José, A., E-28007 Madrid (ES)
(74) Representative: Carpintero Lopez, Francisco
(86) International application number: PCT/ES2009/070219
(87) International publication number: WO 2009/150280

(56) References cited:
- MX-A- PA00 011 620
- US-A- 5 119 739
- US-A1- 2002 005 706
- US-A1- 2005 088 135

## Description

### Object of the Invention

The object of the present invention patent application is a control system for controlling the movement of passenger access doors in railway vehicles and a method for operating them based on said system.

More specifically, the purpose of the system object of the present invention is to reduce the number of incidents occurring in said doors such that they reduce the disturbances caused in circulation for this reason, increasing reliability and reducing the corrective maintenance tasks.

This reduction of the number of incidents is aimed, on one hand, at performing a specific operating method for operating the doors in each of their operational and non-operational phases, supported by a specific system for controlling the power of the motor and another one for controlling the state and position sensors of said doors.

### Background of the Invention

The high number of doors that railway vehicles currently have and the high number of operations which said doors perform throughout the day is known.

This high number of operations causes, on more occasions than desired, malfunctions due to different causes, especially due to the electromechanical nature of their components and therefore to their vulnerability to vibrations, dirt, etc.

More specifically, the electronic systems for controlling the motor moving the doors of railway vehicles today are based on three different stages:
- An electronic power stage the function of which is to provide the supply voltage level of the motor according to the required speed.
- A second electromechanical stage, formed by relays, or by power electronics, formed by semiconductors, such as MOSFET transistors for example, which allows reversing the polarity of the motor in order to fix the rotation direction.
- An electronic power stage the function of which is to apply a brake to the motor by means of, for example, a load resistance.

These configurations present, however, as previously stated, the problem of using electromechanical components, such as relays, which offer low reliability.

Said stages are also performed independently, so a high number of transistors is needed.

On the other hand, in addition to the mentioned problems, it is necessary to consider the fact that in order to obtain information about the state and position of the doors, the solution typically adopted is that of using micro mechanical circuit breakers positioned along the travel, which has the drawbacks indicated above, and/or low-resolution encoders which give a very rough indication of the position of the door, not being valid for detecting small movements thereof.

In the state of the art, some control systems for train doors are known, such as in the case of US 5119739A.

### Description of the Invention

The control system for controlling doors of the present invention thus solves the problems discussed above, minimizing the electromechanical elements used and therefore reducing the number of incidents.

The improvements of the present invention are mainly carried out by two essential aspects in the operating method for operating the doors, specifically in the power control means of the direct current motor in charge of the opening and closing, as well as in the state and position control means of said doors.

In relation to the power control means of the motor, said means comprise a single bridge of four transistors capable of unifying the three stages that are typically performed independently, thus reducing the number of elements, which results in simplifying the assembly, reducing the number of breakdowns, etc.

On the other hand, the state and position control means of the doors comprise a triple-check for said state and position, which allows a high degree of certainty with respect to the actual position of the door.

The control system for doors of the invention is generally based on a microprocessor which processes the external controlling open and close signals, as well as those of the state and position control means of said doors, and from this information, it controls the motor through the power control means of said motor.

With respect to the operating method for operating the doors, based on both the mentioned state and position control means of the doors and the power control means of the motor, such method comprises the following stages:
- Switching the system on:
   Given that in the moment power is supplied to the system it is impossible to know beforehand the exact situation of the door since it may have been displaced, for example, manually while there was no voltage, the location of said door is performed.

To that end, voltage is applied to the direct current motor such that the latter displaces the door at a low speed in the open or close direction until it reaches the end of travel, as a result of the state and position control means, taking said position as a reference.
- Standby situation:
   Once the doors are located and they are in the idle situation, the system is prepared to perform the relevant opening or closing maneuvers that are demanded, whichever is required. If the last order received was to close the doors, the motor remains stopped and the attempt to forcefully open the doors manually is watched and prevented, detecting if the doors are displaced, no matter how little, as a result of the state and position control means of doors.
- Open order:
   The microprocessor commands the bridge of transistors to operate the motor in the door open direction and such that the speed is controlled in the travel thereof in order to achieve a quick opening and end damping and braking preventing the doors from hitting against the stops. When the open cycle ends, the bridge of transistors remains open, whereby the motor offers no retention and allows the doors to be free, being able to be closed manually if needed, for example due to a breakdown of the system.
- Close order:
   The microprocessor commands the bridge of transistors to operate the motor in the door close direction and such that the speed is controlled in the travel thereof in order to achieve a quick closing and end damping and braking preventing the doors from hitting one another. When the close cycle ends, the bridge of transistors is in the brake mode (the ends of the motor are short-circuited), whereby the motor offers great resistance to displacement in order to hinder the manual movement of the doors. The system is in the standby situation according to the previously described stage.
- Closed door check:
   The most critical part of the working of the train doors is that of assuring that the doors are closed when the train is circulating, so the triple-check of said state and position is performed by the state and position control means.

### Description of the Drawings

To complement the description that is being made and for the purpose of aiding to better understand the features of the invention according to a preferred practical embodiment thereof, a set of drawings is attached as an integral part of said description in which the following has been depicted with an illustrative and non-limiting character:
Figure 1 shows a flowchart of the different stages of the operating method of the invention.
Figures 2 to 6 show the different working states of the full bridge in the power control of the motor of the doors.
Figure 7 shows a schematic block diagram of the position and state control of the doors.
Figure 8 shows a schematic block diagram of the additional safety measures.

### Preferred Embodiment of the Invention

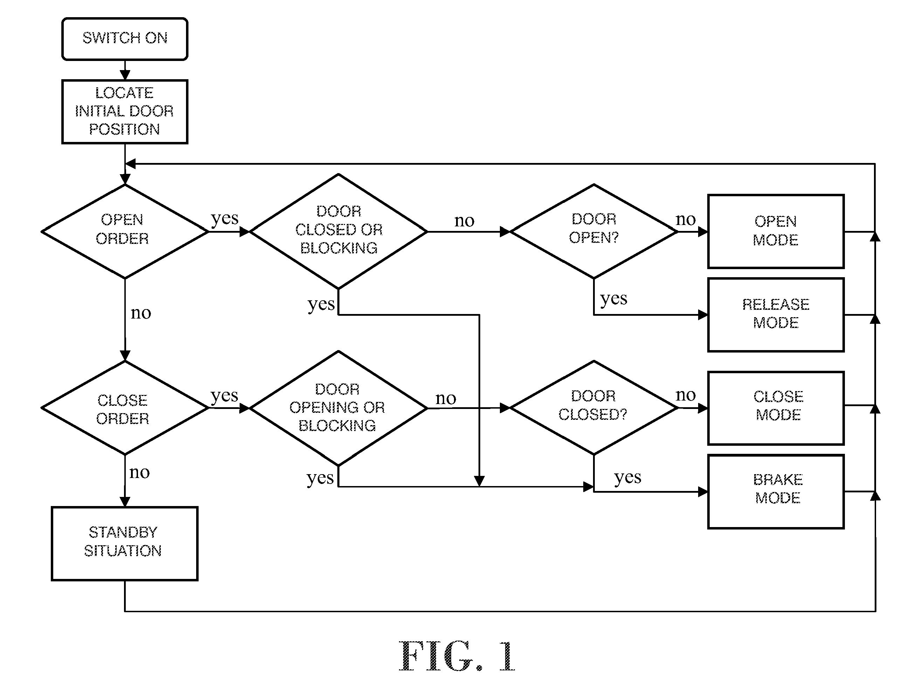

As can be seen in the drawings, particularly in Figure 1, the operating method for operating doors of the invention goes through several working states or stages which determine the correct and safe working, covering all the possible situations and contingencies, all based, according to the preferred embodiment that is described below, on using the control system also object of the present invention, which comprises both power control means of the direct current motor (5) in charge of opening and closing said doors, as well as on the state and position control means thereof.

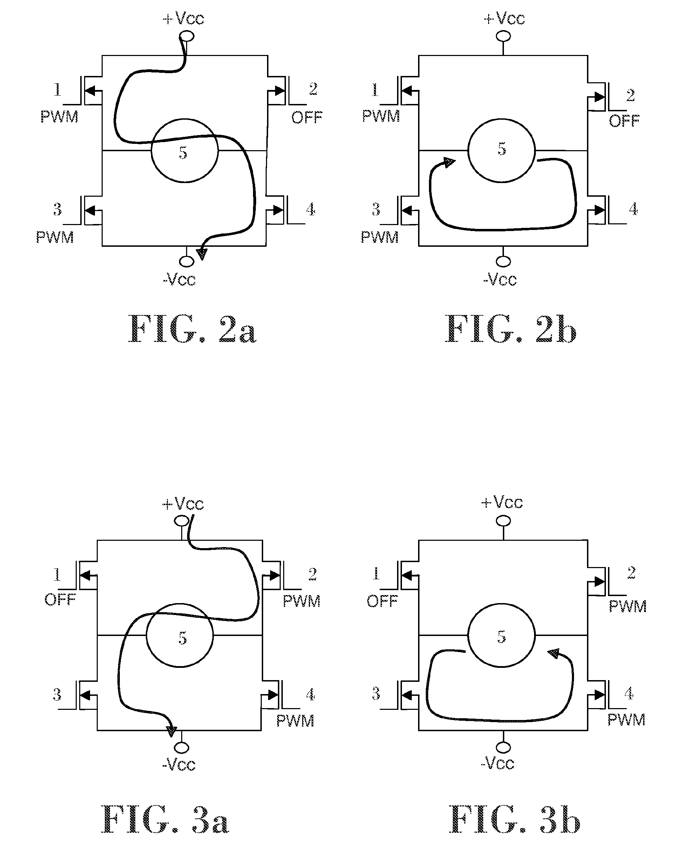

With respect to the power control means of the motor (1), and as can be seen in Figures 2 to 6, these means comprise a bridge of four transistors (1, 2, 3 and 4), specifically a bridge of the type referred to as a "full bridge" which, due to its operating mode, is capable of integrating the three stages of regulating the voltage of the motor (5), reversing the polarity or rotation and applying a brake in a single stage, without needing to use relays in the commutations. According to a possible embodiment, said transistors could be MOSFET-type transistors, or in other alternatives they could be bipolar transistors, etc.

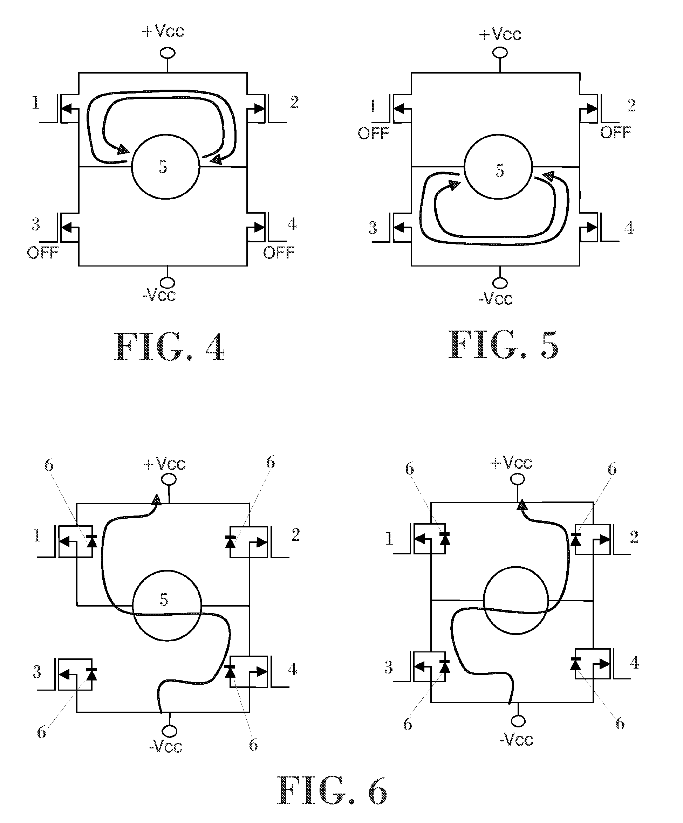

Therefore, the mentioned operation of the four transistors (1, 2, 3 ,4) forming the mentioned full bridge typology capable of integrating the three stages of regulating the voltage of the motor (5), reversing the polarity or rotation of and applying a brake to said motor (5) in a single stage is performed as follows:
a) To activate the rotation of the motor (5) in one direction, and as can be seen in Figure 2a, transistor (4) is tripped and transistor (2) is kept off or in "OFF". Transistors (1) and (3), which are both in the same side branch of the bridge, are tripped in push-pull by means of a pulse width modulation (PWM), in which the working cycle of said PWM is fixed depending on the voltage which is to be applied to the motor, which will determine the speed and pressure of the doors.
   On the other hand, said PWM modulation for transistor (1) and the one corresponding to transistor (3) S3 may or may not be exactly the conjugated one and it may or may not leave dead times between them, as required.
   More specifically, the choice of the type of PWM modulation will depend on the study of the characteristics of the motor (5) and on the specific application. This is because when the motor (5) stops applying a voltage during the PWM modulation cycles, it behaves like a generator and it is necessary to provide a circulation path for its current or high voltage pulses which translate into interferences with other equipment are otherwise generated. Therefore according to an embodiment of the invention, by acting on the conduction time of transistor (3) it is possible to control how much energy will be returned to the supply and how much will be recirculated until the following cycle.
   More specifically, and as can be seen in said Figure 2a, when transistor (1) is driving and transistor (3) is off, the supply voltage is applied to the motor (5), producing a current circulation. However, as can be seen in Figure 2b, when transistor (1) is switched off and transistor (3) is switched on by means of the PWM modulation, the wires of the motor are short-circuited and the current recirculates because a motor has an inductive behavior and the current therefore cannot abruptly stop.
b) To activate the rotation of the motor (5) in the other direction, and as can be seen in Figure 3a, transistor (3) is tripped, keeping transistor (1) off or in "OFF". Now it is transistors (2) and (4), which are both in the same side branch of the bridge, which are tripped in push-pull by means of pulse width modulation PWM, fixing the working cycle of said PWM depending on the voltage which is to be applied to the motor (5) and therefore on the desired rotation speed thereof, which, as in the previous case, will determine the speed and pressure of the doors.
   As in the previous case, said PWM modulation for transistor (2) and the one corresponding to transistor (4) may or may not be exactly the conjugated one and it may or may not leave dead times between them for the same reasons explained above.
   Therefore, and as can be seen in Figure 3a, when transistor (2) is driving and transistor (4) is off, supply voltage is applied to the motor (5), producing a current circulation. However, as can be seen in Figure 3b, when transistor (2) is switched off and transistor (4) S4 is switched on, zero volts are applied to the motor (5) and the current recirculates.
c) To apply the brake to the motor (5), and as can be seen in Figures 4 and 5, the transistors of the upper or lower branches can be kept simultaneously off or on, i.e., either keeping transistors (1) and (2) of the upper branches on and transistors (3) and (4) of the lower branches off or in "OFF", or vice versa.
   In this situation, the current of the motor (5) recirculates and its direction depends on the rotation direction of said motor (5). Given that the circuit is not ideal, a small voltage will occur due to losses, which voltage, with the necessary time, will end up de-magnetizing the motor (5) and the current will be canceled. Furthermore, if the attempt is made to move the door manually, the motor (5) will become a generator with the terminals short-circuited, whereby it puts up great resistance to displacement.
   More specifically, the application of the brake quickly reduces the speed of the doors when they are being displaced, further hindering the manual movement thereof once they are closed. Therefore if someone attempts to open the doors when they must be closed, he will need to exert tremendous effort and the opening will be minimal before the motor (5) acts in close mode.
d) Finally, there is a situation in which the door is to be free of the brake so that it can manually be displaced, for example in a situation of being trapped. To that end, as can be seen in Figure 6, the four transistors (1, 2, 3, 4) of the full bridge are opened, whereby the motor (5) is in the brake release or free situation.

Therefore, in the event that this manual displacement occurs, the current generated by the motor (5) is again driven by the intrinsic diodes (6) of the transistors towards the supply, the circuit being closed through the capacitors thereof, which have not been depicted.

However, upon switching between the different operating modes of the motor (5) described above, i.e., from rotation in one direction to the other, from rotation to brake release situation or from rotation to brake application situation, overcurrents and voltage peaks occur in switching states that are generated by said motor (5) due to its predominantly inductive component and to the mechanical inertia it has, making it act like a voltage generator, for example, when it switches from one rotation direction to another.

Therefore, when the door in its open or close cycle encounters an obstacle, it is necessary for the door to stop and be freed of force in order to allow moving it manually and freeing the obstacle. To perform this operation, it is necessary to open the bridge of transistors (1, 2, 3, 4) so that the motor (5) is in the brake release situation or free, but if the attempt is made to open said bridge as it is commutating, the energy stored in the coil of the motor (5) will make the current continue to circulate through it with the same intensity and direction. This causes the voltage to increase in terminals thereof to maintain the current circulation, and it is reflected in the form of electric noise or even in the breaking of components due to an overvoltage.

To solve this problem, and provided that it is necessary to open the bridge of transistors during a running cycle, according to a preferred embodiment of the present invention, a short time period in brake mode according to operating mode c) described above and shown in Figures 4 and 5 is introduced between the cutoff of the modulation of the transistors (1, 2, 3, 4) and the complete opening thereof, simultaneously keeping the transistors of the upper or lower branches off or on, i.e., either keeping transistors (1) and (2) of the upper branches on and transistors (3) and (4) of the lower branches off, or vice versa.

The current of the motor (5) is thereby recirculated and the stored energy is dissipated as heat due to the losses caused by the intrinsic resistance of the circuit (winding of the motor, cable resistances, resistances of the commutating devices etc.). The four transistors (1, 2, 3, 4) of the bridge can then be opened without any problem, making much less noise and making the process safer.

In the same manner, when it is necessary to reverse the rotation direction of the motor (5), a similar process is followed, applying the braking configuration explained above, which consists of simultaneously keeping the transistors of the upper or lower branches off or on, which allows recirculating the current of the motor (5) and the motor stopping. Once said motor (5) has stopped, the control can be applied with the required rotation direction without any problem.

On the other hand, in addition to the control which the microprocessor (7) has over the power control means of the motor, processing the external controlling open and close signals emitted by the operator, it also has control over the state and position control means of said doors, which compile the specific situation the door is in at all times.

According to a preferred embodiment of the invention, and as has been described, said state and position control means of the doors comprise a triple-check of said state and position, which allows a high degree of certainty with respect to the actual position of the door.

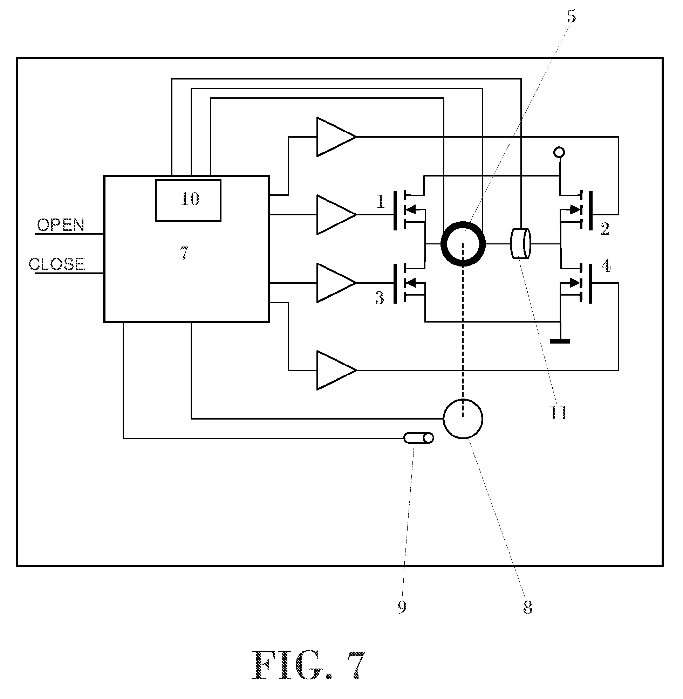

More specifically, and as can be seen in Figure 7, said means comprise a high-resolution encoder (8) coupled to the shaft of the motor (5) which allows determining the exact position of the door as well as its displacement speed and direction, which allows reacting with precision in critical situations such as when the attempt is made, for example, to forcefully open the doors manually when there is a close order, immediately acting accordingly.

As a second check, said means furthermore comprise a contact-free magnetic sensor (9) which acts like a limit switch to detect the complete closing of the door and its mechanical anchoring.

As a third check of said state and position of the doors, said means comprise the determination of the limit switches of the door due to overcurrent measured in the motor (5), to which end, according to a preferred embodiment, an analog-to-digital converter (10) which samples the voltage applied to said motor (5), the current circulating therethrough obtained by means of a sensor, for example a Hall effect sensor (11), as well as the open-circuit voltages of the bridge of transistors (1, 2, 3, 4), is used to detect a possible break thereof.

This information obtained by means of the analog-to-digital converter (10) described is additionally used to recognize the general state of the electrical system and to thus protect the assembly from possible overloads or in a malfunction situation.

Therefore, according to the described embodiment, data are obtained from three different sensors to assure safety in the control of the doors, which data are: the position calculated from the information of the high-resolution encoder (8), the magnetic sensor (9) indicating that the safe mechanical anchoring of the door was activated and, finally, the measurement through the analog-to-digital converter (10) of the overcurrent occurring in the motor (5) due to the locking of the shaft occurring when the door reaches the end of its travel.

All this information is used to interrupt the application of energy to the motor (5) during the closing maneuver, considering said maneuver to be concluded.

Therefore when the door has to be closed, such as when the train is running for example, if an attempt to open said door is detected, the level of influence of such attempt is analyzed and the corresponding action is performed. If the door is displaced, this displacement is detected by means of the high-resolution encoder (8) and voltage is applied to the motor (5) to force the closing, but if only a maneuver has been performed on the opening actuator which releases the mechanical anchoring of the door indicated by the magnetic sensor (9), the system increases its sensitivity to the movement, but it does not act as long as the door is not displaced. The sensitivity to displacement is readjusted according to the indication of said magnetic sensor (9) of the anchoring being in place or removed.

Without removing the mechanical anchoring the door cannot be opened, but due to mechanical allowances there is a small margin of travel that the system must allow, but when the anchoring is released, this allowance must be much less.

With respect to the basic operation of the control system described in Figure 1, and according to the preferred embodiment described, the latter can be explained as follows:
- Switching the system on:
   To locate the door, voltage is applied to the motor (5) such that the latter displaces the door at a low speed in the appropriate open or close direction until it reaches the end of travel, taking said position as a reference. This end of travel is determined by the measurement of the overcurrent occurring when the door reaches the limit switch stop of the door, as a result of the analog-to-digital converter (10) and it is confirmed, in the case of closing, with the magnetic sensor (9) which acts upon closing the door.
- Standby situation:
   Once the doors are located and they are in the idle situation, the system is prepared to perform the relevant opening or closing maneuvers that are demanded, whichever is required. If the last order received was to close the doors, the motor (8) remains stopped and the attempt to forcefully open the doors manually is watched and prevented, detecting if the doors are displaced, no matter how little, as a result of the high-resolution encoder (8), applying energy to the motor only if there is an actual attempt to open the doors, eliminating unnecessary actions.
- Open order.
   The microprocessor (7) commands the bridge of transistors (1, 2, 3, 4) to operate the motor (8) in the door open direction. The speed is controlled in the travel thereof in order to achieve a quick opening and end damping and braking preventing the doors from hitting against the stops. When the open cycle ends, the bridge of transistors (1, 2, 3, 4) remains open, whereby the motor (8) offers no retention and allows the doors to be closed manually if needed.
- Close order.
   The microprocessor commands the bridge of transistors (1, 2, 3, 4) to operate the motor (5) in the door close direction. The speed is controlled in the travel thereof in order to achieve a quick opening and end damping and braking preventing the doors from hitting one another. When the close cycle ends, the bridge of transistors (1, 2, 3, 4) is in the brake mode offering great resistance to displacement in order to hinder the manual movement of the doors.
- Closed door check.
   To determine this critical situation, the triple-check of the state of the doors is performed by means of the three mentioned sensors, i.e., the door closed position is verified through the high-resolution encoder (8), it is verified through the magnetic sensor (9) that the mechanical closing acted, and it is furthermore checked that an overcurrent occurs due to the inability of the motor to advance by means of the analog-to-digital converter (10).

Additionally, and according to a practical embodiment of the invention, the system of the invention incorporates additional safety measures protecting it from a malfunction of any of its parts, which malfunction is susceptible of occurring because the system is, after all, an electronic system.

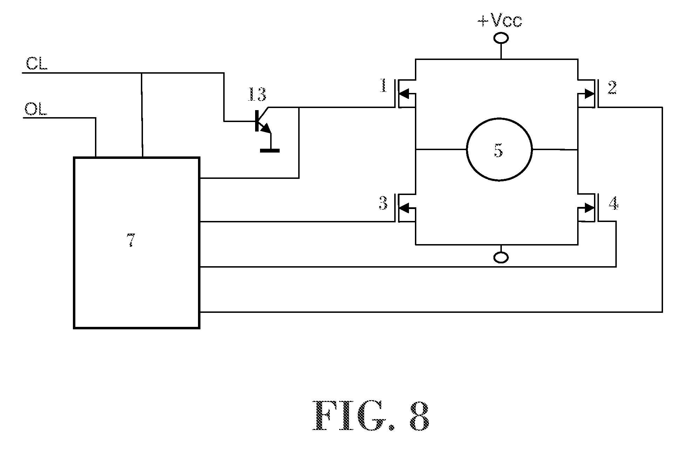

Generally, and according to said Figure 8, it is observed how, in order to open the doors, the operator, or in the absence thereof, the control system of the train, selects the side of the train on which the doors will be open and gives the authorization to open them by activating the open line OL and deactivating the close line CL, of all the doors on said side. This enables the doors and allows the passengers who want to get out to open each of them by means of a local actuator (handle, button, etc.).

The closing operation is performed in this manner, this time activating the line CL and deactivating OL. All the doors that are open will close automatically.

A possible embodiment can also been seen in said Figure 8 which prevents, when a doors closed order is given activating line CL, a malfunction in the system from being able to make said doors open accidentally.

Specifically, the command control over the bridge of transistors (1, 2, 3, 4) is the responsibility of the software of the microprocessor (7), but in order to respond to said possible malfunction situations it is necessary to have a redundancy which assures the correct response despite said malfunction. To that end a hardware device (13), such as a transistor, switch, etc., operated by the close line train CL, preventing the bridge of transistors (1, 2, 3, 4) from being able to command the motor (5) in open mode when a physical closing order is given, is used.

Said hardware device (13) causes the blocking of the transistor (1) of the upper branch of the bridge of transistors (1, 2, 3, 4) which must be modulated in PWM in order to be able to open the door according to the previously described sequence. Specifically, the close line train CL makes the hardware device (13) drive and the latter shunts the gate of the power transistor (1) to ground, preventing the latter from being able to drive and therefore preventing it from being able to command the motor in open mode.

On the other hand, as a result of the information about the voltage and current of the motor provided by the different sensors of the system, such as the high-resolution encoder (8), the magnetic sensor (9) or especially the analog-to-digital converter (10) and/or others, as well as other similar information, such as that obtained, for example, with respect to the state of the power supply, the system is capable of determining, by implementing the corresponding logic analyzer software in the microprocessor (7), the proper working of the entire assembly, making it stay in a safe state when any problem is detected and thus preventing breakdowns or major problems.

Out of all the components forming the system of the invention, it is especially necessary to watch or verify the state and the proper working of both the power bridge formed by the four transistors (1, 2, 3, 4) and of the elements involved in blocking the opening of the doors when there is a close order.

Specifically, this watching or verification of the bridge of transistors (1, 2, 3, 4) can be done, according to a possible embodiment, by verifying that the voltages thereof correspond with a high impedance (floating lines) when none of said transistors is activated, so the voltage in any of the wires of the motor (5) will be a fraction of that of the supply thereto.

With regard to watching or verifying the blocking of the opening with a close order, this is done by switching the system on and when the first close order is received. At this time, an attempt is made to move the motor in the open direction and it is verified that said maneuver is impossible to perform when the protection is actuated.

Finally, the system can have software watch means for watching the remaining elements of the system, specifically the memory, internal logs, watchdog, peripherals, etc., that are capable of paralyzing the system when any anomaly is detected, taking it to a safe state.

## Claims

1. Control system for train doors comprising power control means of the motor (5) operating the doors in charge of regulating the voltage, reversing the polarity or rotation of and applying a brake to said motor (5), state and position control means of said doors and a microprocessor (7) which processes the external controlling open and close signals, as well as those of said state and position control means of said doors to perform, from this information, the control of the motor through the power control means of said motor, wherein the power control means of the motor (5) comprise a single bridge of four transistors (1, 2, 3 and 4), and in that the state and position control means of the doors comprise:
- an encoder coupled to the shaft of the motor (5) for determining the position, speed and direction of the door; and
- a limit switch for detecting the complete closing of the door and its mechanical anchoring; **characterized in that** it also comprises:
- means for determining an overcurrent occurring in the motor (5) due to the blocking of the shaft occurring when the door reaches the end of its travel, performing a triple-check of the state and position of said doors; and
- **in that** in order to respond to malfunction situations of the microprocessor (7), it comprises a hardware device (13) operated by the close line preventing the bridge of transistors (1, 2, 3, 4) from being able to command the motor (5) to open the doors if there is a close order, preventing said doors from opening accidentally.

2. Control system for train doors according to claim 1, **characterized in that** the hardware device (13) has means capable of blocking the transistor (1) of the upper branch of the bridge of transistors (1, 2, 3, 4) by shunting the gate of the transistor (1) to ground and preventing it from being able to command the motor in open mode.

3. Control system for train doors according to claim 1, **characterized in that** the bridge of four transistors (1, 2, 3 and 4) adopts a full bridge configuration.

4. Control system for train doors according to claim 3, **characterized in that** the transistors (1, 2, 3 and 4) are MOSFET type transistors.

5. Control system for train doors according to claim 1, **characterized in that** the encoder coupled to the shaft of the motor (5) for determining the position, speed and direction of the door is a high-resolution encoder (8).

6. Control system for train doors according to claim 1, **characterized in that** the limit switch for detecting the complete closing of the door and its mechanical anchoring is a contact-free magnetic sensor (9).

7. Control system for train doors according to claim 1, **characterized in that** the means for determining the overcurrent measured in the motor (5) comprise an analog-to-digital converter (10) which samples the voltages applied to said motor (5) and a sensor for sampling the current circulating therethrough.

8. Control system for train doors according to claim 7, **characterized in that** the sensor for sampling the current circulating through the motor (5) is Hall effect sensor (11).

9. Control system for train doors according to claim 1, **characterized in that** it comprises a stage (12) in the voltage supply prior to the power stage which allows the microprocessor (7) to inhibit the supply in unsafe situations.

10. Control system for train doors according to claim 9, **characterized in that** analyzer software is implemented in the microprocessor (7) for checking the proper working of the system.

11. Method for operating train doors based on the system of claims 1 to 10, **characterized in that** the operation of the four transistors (1, 2, 3, 4) making up the power control means of the motor (5) for regulating the voltage, reversing the polarity or rotation of and applying a brake to said motor (5) comprises the stages of:
- activating the rotation of the motor (5) in one direction;
- activating the rotation of the motor (5) in the other direction;
- applying a brake to the motor (5); and
- releasing the brake,
wherein the stage of applying a brake to the motor (5), in addition to being applied in situations in which doors are to offer great resistance to manual displacement, is additionally applied for a short time period in the transition between the other three stages of rotation in one direction, rotation in the other direction and the brake release situation such that the current of the motor (5) recirculates, being canceled.

12. Method for operating train doors according to claim 11, **characterized in that** to activate the rotation of the motor (5) in one direction or in the other direction, two transistors located in the same side branch are tripped in push-pull whereas one of the transistors in the other branch Is tripped and the other one is kept off.

13. Method for operating train doors according to claim 12, **characterized in that** in order to prevent high voltage pulses during the tripping In push-pull of the transistors located in the same side branch, the driving time of the transistor located at the lower part (3, 4) in said side branch is acted on to control the amount of energy that will be returned to the supply and that which will be recirculated until the following cycle.

14. Method for operating train doors according to claims 12 and 13, **characterized in that** the trip in push-pull of the transistors located in the same side branch is a function of the voltage that is to be applied to the motor (5) and therefore of the desired rotation speed thereof, which determines the speed and pressure of the doors.

15. Method for operating train doors according to claim 11, **characterized in that** the stage of applying a brake to the motor comprises the operation of keeping transistors (1).and (2) of the upper branches on and transistors (3) any (4) of the lower branches off, or vice versa.

16. Method for operating train doors according to claim 11, **characterized in that** the stage of releasing the brake in the motor (5) comprises the opening of four transistors (1, 2, 3, 4), the current generated by the motor (5) being driven again by the intrinsic diodes (6) of the transistors towards the supply such that the door can be manually displaced.

17. Method for operating train doors according to claim 11, **characterized in that** prior to the stages of activating in one direction or in the other, applying a brake and releasing the brake in the motor (5), the door is located by applying voltage to said motor (5) so that the latte displaces it at a low speed in the appropriate open or close direction, until it reaches the end of travel, taking said position as a reference.

## Patentansprüche

1. Steuersystem für Zugtüren, das eine Leistungsteuereinrichtung des Motors (5), der die Türen betreibt, verantwortlich dafür, die Spannung zu regeln, die Polarität oder Drehung des Motors (5) umzukehren, und eine Bremse an denselben anzulegen, eine Zustands- und Positionssteuereinrichtung der Türen und einen Mikroprozessor (7) aufweist, der die externen steuernden Öffnen- und Schließen-Signale verarbeitet, sowie diejenigen der Zustands- und Positionssteuereinrichtung der Türen, um von dieser Information die Steuerung des Motors durch die Leistungssteuereinrichtung des Motors durchzuführen, wobei die Leistungssteuereinrichtung des Motors (5) eine einzige Brücke von vier Transistoren (1, 2, 3 und 4) aufweist, und wobei die Zustands- und Positionssteuereinrichtung der Türen folgende Merkmale aufweist:
einen Codierer, der mit der Welle des Motors (5) gekoppelt ist zum Bestimmen der Position, Geschwindigkeit und Richtung der Tür; und
einen Grenzschalter zum Erfassen des vollständigen Schließens der Tür und deren mechanischer Verankerung; **dadurch gekennzeichnet, dass** dieselbe ferner folgende Merkmale aufweist:
eine Einrichtung zum Bestimmen eines Überstroms, der in dem Motor (5) auftritt aufgrund der Blockierung der Welle, die auftritt, wenn die Türe das Ende ihrer Bewegung erreicht,
Durchführen einer Dreifachprüfung des Zustands und der Position der Türen; und
wobei, um auf Fehlfunktionssituationen des Mikroprozessors (7) anzusprechen, dieselbe eine Hardwarevorrichtung (13) aufweist, die durch die Schließen-Leitung betrieben wird, die verhindert, dass die Brücke von Transistoren (1, 2, 3, 4) in der Lage ist, den Motor (5) anzuweisen, die Türen zu öffnen, wenn es einen Schließen-Befehl gibt, wodurch verhindert wird, dass sich die Türen versehentlich öffnen.

2. Steuersystem für Zugtüren gemäß Anspruch 1, **dadurch gekennzeichnet, dass** die Hardwarevorrichtung (13) eine Einrichtung aufweist, die in der Lage ist, den Transistor (1) des oberen Zweigs der Brücke von Transistoren (1, 2, 3, 4) zu sperren durch Nebenschließen des Gates des Transistors (1) mit Masse und zu verhindern, dass derselbe in der Lage ist, den Motor im Öffnen-Modus anzuweisen.

3. Steuersystem für Zugtüren gemäß Anspruch 1, **dadurch gekennzeichnet, dass** die Brücke von vier Transistoren (1, 2, 3 und 4) eine Vollbrückenkonfiguration annimmt.

4. Steuersystem für Zugtüren gemäß Anspruch 3, **dadurch gekennzeichnet, dass** die Transistoren (1, 2, 3 und 4) MOSFET-Typ-Transistoren sind.

5. Steuersystem für Zugtüren gemäß Anspruch 1, **dadurch gekennzeichnet, dass** der Codierer, der mit der Welle des Motors (5) gekoppelt ist, zum Bestimmen der Position, Geschwindigkeit und Richtung der Tür, ein Hochauflösungscodierer (8) ist.

6. Steuersystem für Zugtüren gemäß Anspruch 1, **dadurch gekennzeichnet, dass** der Grenzschalter zum Erfassen des vollständigen Schließens der Tür und deren mechanischer Verankerung ein berührungsloser Magnetsensor (9) ist.

7. Steuersystem für Zugtüren gemäß Anspruch 1, **dadurch gekennzeichnet, dass** die Einrichtung zum Bestimmen des Überstroms, der in dem Motor (5) gemessen wird, einen Analog-Digital-Wandler (10), der die Spannung abtastet, die an den Motor (5) angelegt ist, und einen Sensor zum Abtasten des Stroms, der durch denselben zirkuliert, aufweist.

8. Steuersystem für Zugtüren gemäß Anspruch 7, **dadurch gekennzeichnet, dass** der Sensor zum Abtasten des Stroms, der durch den Motor (5) zirkuliert, ein Hall-Effekt-Sensor (11) ist.

9. Steuersystem für Zugtüren gemäß Anspruch 1, **dadurch gekennzeichnet, dass** dasselbe eine Stufe (12) in der Spannungsversorgung vor der Leistungsstufe aufweist, die es dem Mikroprozessor (7) ermöglicht, die Versorgung in unsicheren Situationen zu sperren.

10. Steuersystem für Zugtüren gemäß Anspruch 9, **dadurch gekennzeichnet, dass** die Analysatorsoftware in dem Microprozessor (7) implementiert ist zum Überprüfen des ordnungsgemäßen Betriebs des Systems.

11. Verfahren zum Betreiben von Zugtüren basierend auf dem System gemäß einem der Ansprüche 1 bis 10, **dadurch gekennzeichnet, dass** der Betrieb der vier Transistoren (1, 2, 3, 4), die die Leistungssteuereinrichtung des Motors (5) bilden zum Regeln der Spannung, Umkehren der Polarität oder Drehung des Motors (5) und Anlegen einer Bremse an denselben folgende Stufen aufweist:
Aktivieren der Drehung des Motors (5) in einer Richtung;
Aktivieren der Drehung des Motors (5) in der anderen Richtung;
Anlegen einer Bremse an den Motor (5); und
Lösen der Bremse,
wobei die Stufe des Anlegens einer Bremse an den Motor (5) zusätzlich dazu, dass dieselbe in Situationen angelegt wird, in denen Türen einen großen Widerstand gegenüber manueller Verschiebung bieten müssen, zusätzlich für eine kurze Zeitperiode angelegt wird bei dem Übergang zwischen den anderen drei Stufen der Drehung in einer Richtung, Drehung in der anderen Richtung und der Bremslösesituation, so dass der Strom des Motors (5), der rezirkuliert, aufgehoben wird.

12. Verfahren zum Betreiben von Zugtüren gemäß Anspruch 11, **dadurch gekennzeichnet, dass**, um die Drehung des Motors (5) in einer Richtung oder in der anderen Richtung zu aktivieren, zwei Transistoren, die in dem gleichen Seitenzweig angeordnet sind, in Push-Pull ausgelöst werden, während einer der Transistoren in dem anderen Zweig ausgelöst wird und der andere ausgeschaltet bleibt.

13. Verfahren zum Betreiben von Zugtüren gemäß Anspruch 12, **dadurch gekennzeichnet, dass**, um hohe Spannungspulse während des Auslösens bei Push-Pull der Transistoren, die in dem gleichen Seitenzweig angeordnet sind, zu verhindern, auf die Antriebszeit des Transistors, der an dem unteren Teil (3, 4) in dem Seitenzweig angeordnet ist, eingewirkt wird, um die Menge an Energie zu steuern, die zu der Versorgung zurückgeführt wird und die bis zu dem folgenden Zyklus rezirkuliert wird.

14. Verfahren zum Betreiben von Zugtüren gemäß den Ansprüchen 12 und 13, **dadurch gekennzeichnet, dass** das Auslösen in Push-Pull der Transistoren, die in dem gleichen Seitenzweig angeordnet sind, eine Funktion der Spannung ist, die an den Motor (5) anzulegen ist, und daher der gewünschten Drehgeschwindigkeit desselben, die die Geschwindigkeit und den Druck der Türen bestimmt.

15. Verfahren zum Betreiben von Zugtüren gemäß Anspruch 11, **dadurch gekennzeichnet, dass** die Stufe des Anlegens einer Bremse an den Motor den Schritt des Eingeschaltetlassens der Transistoren (1 und 2) der oberen Zweige und des Ausgeschaltetlassens der Transistoren (3 und 4) der unteren Zweige oder umgekehrt aufweist.

16. Verfahren zum Betreiben von Zugtüren gemäß Anspruch 11, **dadurch gekennzeichnet, dass** die Stufe zum Lösen der Bremse in dem Motor (5) das Öffnen von vier Transistoren (1, 2, 3, 4) aufweist, wobei der Strom, der durch den Motor (5) erzeugt wird, erneut angetrieben wird durch die intrinsischen Dioden (6) der Transistoren zu der Versorgung hin, so dass die Tür manuell verschoben werden kann.

17. Verfahren zum Betreiben von Zugtüren gemäß Anspruch 11, **dadurch gekennzeichnet, dass** vor den Stufen des Aktivierens in einer Richtung oder der anderen, des Anlegens einer Bremse und des Lösens der Bremse in dem Motor (5), die Türe angeordnet ist durch Anlegen von Spannung an den Motor (5), so dass der letztere dieselbe mit niedriger Geschwindigkeit in der entsprechenden Öffnen- oder Schließen-Richtung verschiebt, bis dieselbe das Ende der Bewegung erreicht, wobei diese Position als eine Referenz genommen wird.

## Revendications

1. Système de commande de portes de train comprenant des moyens de commande de puissance du moteur (5) actionnant les portes, chargés de réguler la tension, d'inverser la polarité ou la rotation et d'appliquer un frein sur ledit moteur (5), des moyens de commande d'état et de position desdites portes et un microprocesseur (7) qui traite les signaux d'ouverture et de fermeture de commande externe, ainsi que ceux desdits moyens de commande d'état et de position desdites portes pour réaliser, à partir de ces informations, la commande du moteur par le biais des moyens de commande de puissance dudit moteur, dans lequel les moyens de commande de puissance du moteur (5) comprennent un pont unique de quatre transistors (1, 2, 3 et 4), et en ce que les moyens de commande d'état et de position des portes comprennent :
- un codeur couplé à l'arbre du moteur (5) pour déterminer la position, la vitesse et la direction de la porte ; et
- un contacteur de fin de course pour détecter la fermeture complète de la porte et son ancrage mécanique ; **caractérisé en ce qu'**il comprend également :
- des moyens pour déterminer une surintensité se produisant dans le moteur (5) du fait du blocage de l'arbre se produisant lorsque la porte atteint la fin de sa course, en réalisant une triple vérification de l'état et de la position desdites portes ; et
- **en ce qu'**afin de réagir à des situations de dysfonctionnement du microprocesseur (7), il comprend un dispositif matériel (13) actionné par la ligne de fermeture empêchant le pont de transistors (1, 2, 3, 4) de donner au moteur (5) l'instruction d'ouvrir les portes en présence d'un ordre de fermeture, empêchant lesdites portes de s'ouvrir accidentellement.

2. Système de commande de portes de train selon la revendication 1, **caractérisé en ce que** le dispositif matériel (13) comporte des moyens capables de bloquer le transistor (1) de la branche supérieure du pont de transistors (1, 2, 3, 4) en mettant à la terre la grille du transistor (1) et en l'empêchant de pouvoir donner une instruction au moteur en mode d'ouverture.

3. Système de commande de portes de train selon la revendication 1, **caractérisé en ce que** le pont de quatre transistors (1, 2, 3, et 4) adopte une configuration de pont intégral.

4. Système de commande pour portes de train selon la revendication 3, **caractérisé en ce que** les transistors (1, 2, 3, et 4) sont des transistors de type MOSFET.

5. Système de commande de portes de train selon la revendication 1, **caractérisé en ce que** le codeur couplé à l'arbre du moteur (5) pour déterminer la position, la vitesse et la direction de la porte est un codeur haute résolution (8).

6. Système de commande de portes de train selon la revendication 1, **caractérisé en ce que** le contacteur de fin de course pour détecter la fermeture complète de la porte et son ancrage mécanique est un capteur magnétique sans contact (9).

7. Système de commande de portes de train selon la revendication 1, **caractérisé en ce que** les moyens pour déterminer la surintensité mesurée dans le moteur (5) comprennent un convertisseur analogique-numérique (10) qui échantillonne la tension appliquée audit moteur (5) et un capteur pour échantillonner le courant circulant à travers.

8. Système de commande de portes de train selon la revendication 7, **caractérisé en ce que** le capteur pour échantillonner le courant circulant à travers le moteur (5) est un capteur à effet Hall (11).

9. Système de commande de portes de train selon la revendication 1, **caractérisé en ce qu'**il comprend un étape (12) dans l'alimentation en tension avant l'étape d'alimentation qui permet au microprocesseur (7) d'inhiber l'alimentation dans des situations dangereuses.

10. Système de commande de portes de train selon la revendication 9, **caractérisé en ce qu'**un logiciel analyseur est mis en oeuvre dans le microprocesseur (7) pour vérifier le fonctionnement correct du système.

11. Procédé de fonctionnement de portes de train basé sur le système des revendications 1 à 10, **caractérisé en ce que** le fonctionnement des quatre transistors (1, 2, 3, 4) constituant les moyens de commande de puissance du moteur (5) chargés de réguler la tension, d'inverser la polarité ou la rotation et d'appliquer un frein audit moteur (5) comprend les étapes suivantes :
- l'activation de la rotation du moteur (5) dans une direction ;
- l'activation de la rotation du moteur (5) dans l'autre direction ;
- l'application d'un frein au moteur (5) ; et
- le relâchement du frein,
dans lequel l'étape d'application d'un frein au moteur (5), en plus d'être appliquée dans des situations dans lesquelles les portes offrent une grande résistance au déplacement manuel, est appliquée en outre pendant une courte période de temps lors de la transition entre les trois autres étapes de rotation dans une direction, de rotation dans l'autre direction et de situation de relâchement du frein de telle sorte que le courant du moteur (5) recircule, est annulée.

12. Procédé de fonctionnement de portes de train selon la revendication 11, **caractérisé en ce que** pour activer la rotation du moteur (5) dans une direction ou dans l'autre direction, deux transistors localisés dans la même branche latérale sont déclenchés en push-pull tandis qu'un seul des transistors dans l'autre branche est déclenché et que l'autre est maintenu désactivé.

13. Procédé de fonctionnement de portes de train selon la revendication 12, **caractérisé en ce que** pour empêcher des impulsions de haute tension lors du déclenchement en push-pull des transistors localisés dans la même branche latérale, on agit sur le temps d'excitation du transistor localisé au niveau de la partie inférieure (3, 4) dans ladite branche latérale pour contrôler la quantité d'énergie qui sera renvoyée vers l'alimentation et qui sera remise en circulation jusqu'au cycle suivant.

14. Procédé de fonctionnement de portes de train selon les revendications 12 et 13, **caractérisé en ce que** le déclenchement en push-pull des transistors situés dans la même branche latérale est fonction de la tension qui sera appliquée au moteur (5) et par conséquent, de la vitesse de rotation souhaitée de celui-ci, qui détermine la vitesse et la pression des portes.

15. Procédé de fonctionnement de portes de train selon la revendication 11, **caractérisé en ce que** l'étape d'application d'un frein sur le moteur comprend l'opération de maintien des transistors (1) et (2) des branches supérieures actifs et des transistors (3) et (4) des branches inférieures inactifs, ou vice-versa.

16. Procédé de fonctionnement de portes de train selon la revendication 11, **caractérisé en ce que** l'étape de relâchement du frein dans le moteur (5) comprend l'ouverture de quatre transistors (1, 2, 3, 4), le courant généré par le moteur (5) étant entraîné à nouveau par les diodes intrinsèques (6) des transistors vers l'alimentation de telle sorte que la porte peut être déplacée manuellement.

17. Procédé de fonctionnement de portes de train selon la revendication 11, **caractérisé en ce qu'**avant les étapes d'activation dans une direction ou dans l'autre, d'application d'un frein et de relâchement du frein dans le moteur (5), la porte est localisée en appliquant une tension sur ledit moteur (5) de sorte que ce dernier la déplace à une faible vitesse dans la direction d'ouverture ou de fermeture appropriée, jusqu'à ce qu'elle atteigne la fin de course, prenant ladite position comme référence.
